(19) Europäisches Patentamt
European Patent Office
Office européen des brevets

(11) **EP 3 521 792 A1**

(12) **EUROPÄISCHE PATENTANMELDUNG**

(43) Veröffentlichungstag:
**07.08.2019 Patentblatt 2019/32**

(51) Int Cl.:
**G01M 15/04** *(2006.01)*

(21) Anmeldenummer: **18154586.4**

(22) Anmeldetag: **01.02.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder:
• **Busch, Harald**
**96155 Dreuschendorf (DE)**
• **Essafi, Hichem**
**91058 Erlangen (DE)**
• **Geipel, Markus Michael**
**80799 München (DE)**
• **Heyer, Oliver**
**41751 Viersen-Dülken (DE)**
• **Kloss, Thomas**
**66903 Dittweiler (DE)**
• **Tokic, Michel**
**88069 Tettnang (DE)**

(54) **EREIGNISBASIERTE ZEITLICHE SYNCHRONISIERUNG**

(57) Vorgeschlagen wird ein Verfahren zur zeitlichen Synchronisation wenigstens zweier Datenzeitreihen (1, 2, 7, 8, 9) und/oder wenigstens zweier Ereignissequenzen (10, 11, 12) von Sensoren, die im Umfeld einer industriellen Anlage auftreten, wobei die wenigstens zwei Datenzeitreihen (1, 2, 7, 8, 9) und/oder Ereignissequenzen (10, 11, 12) eine wechselseitige Korrelation aufweisen. Das Verfahren umfasst die folgenden Schritte:
a) Ermittlung einer wechselseitigen Korrespondenz wenigstens zweier Datenzeitreihen (1, 2, 7, 8, 9) und/oder wenigstens zweier Ereignissequenzen (10, 11, 12) innerhalb eines ersten Zeitabschnitts der Datenzeitreihen (1, 2, 7, 8, 9) und/oder Ereignissequenzen (10, 11, 12) mittels einer Maximierung eines geeigneten Ähnlichkeitsmaßes, insbesondere einer Minimierung einer quadratischen Fehlersumme oder mittels einer Maximierung eines Korrelationskoeffizienten;
b) Berechnung eines zeitlichen Versatzes ($\Delta t1$, $\Delta t2$, $\Delta t3$) zwischen den einzelnen Datenzeitreihen (1, 2, 7, 8, 9) und/oder Ereignissequenzen (10, 11, 12);
c) Zeitliche Korrektur wenigstens einer der Datenzeitreihen (1, 2, 7, 8, 9) und/oder Ereignissequenzen (10, 11, 12);
d) Kontinuierliche Wiederholung der Schritte a) bis c) in auf den ersten Zeitabschnitt folgenden Zeitabschnitten, wobei sich die Zeitabschnitte vorzugsweise teilweise überlappen.

FIG 1

Printed by Jouve, 75001 PARIS (FR)

EP 3 521 792 A1

## EP 3 521 792 A1

**Beschreibung**

Die Erfindung betrifft ein Verfahren zur zeitlichen Synchronisation wenigstens zweier Datenzeitreihen und/oder wenigstens zweier Ereignissequenzen von Sensoren, die im Umfeld einer industriellen Anlage auftreten, wobei die wenigstens zwei Datenzeitreihen und/oder Ereignissequenzen eine wechselseitige Korrelation aufweisen, nach Anspruch 1. Außerdem betrifft die Erfindung ein Verfahren zur zeitlichen Synchronisation wenigstens zweier Datenzeitreihen von Sensoren nach Anspruch 2, ein Verfahren zur zeitlichen Synchronisation wenigstens zweier Ereignissequenzen nach Anspruch 3 und ein Verfahren zur zeitlichen Synchronisation wenigstens einer Datenzeitreihe und wenigstens einer Ereignissequenz von Sensoren nach Anspruch 4. Zudem betrifft die Erfindung ein Synchronisationssystem zur zeitlichen Synchronisation von Datenzeitreihen und/oder Ereignissequenzen von Sensoren nach Anspruch 7, ein Synchronisierungsprogramm zur zeitlichen Synchronisation zur zeitlichen Synchronisation wenigstens zweier Datenzeitreihen und/oder wenigstens zweier Ereignissequenzen von Sensoren nach Anspruch 8, ein Speichermedium mit einem durch einen Computer ausführbaren Synchronisierungsprogramm nach Anspruch 9 und ein Computersystem nach Anspruch 10.

Regelmäßig werden Aspekte eines technischen Systems, beispielsweise einer Gasturbine, von mehr als einem Datenschreiber aufgezeichnet. Die einzelnen Datenschreiber weisen dabei oftmals leicht unterschiedliche technische Charakteristika auf, die zu einem zeitlichen Versatz der aufgezeichneten Datenreihen führen können.

Unter dem Begriff "Versatz" wird im Folgenden jede Art von möglicher zeitlicher Abweichung der Datenreihen verstanden. Beispielsweise kann eine Datenzeitreihe im Vergleich zu einer anderen Datenzeitreihe über einen Offsetwert verfügen. Ein weiteres Beispiel ist eine Stauchung oder Streckung einer Datenzeitreihe in einer beliebigen Richtung. Mit anderen Worten weisen die aufgezeichneten Datenzeitreihen, die einen zeitlichen Versatz zueinander aufweisen, eine zeitliche Asynchronität bezüglich einander auf.

Die Ursachen für den zeitlichen Versatz können dabei beispielsweise in unterschiedlichen Anbindungen der Datenschreiber an das zu vermessende technische System, in Latenzzeiten auf einem verwendeten Datenbussystem, in einer Rechenleistung oder einer zeitlichen Auflösung der Datenschreiber liegen. Der Zeitversatz ändert sich dabei zudem regelmäßig mit der Zeit.

Der zeitliche Versatz zwischen den einzelnen Datenreihen kann für eine Datenanalyse problematisch sein, insbesondere für die Analyse von Ursache-Wirkung-Beziehungen (auch als Root Cause Analysis bezeichnet), im Rahmen derer zeitliche Beziehungen wie Vorher-Nachher-Beziehungen eine maßgebliche Rolle spielen.

Beispielsweise kann bei einer Analyse von Sensordaten einer Gasturbine, bei welcher Daten mittels WinTS (Windows Control Center Telecommunication Suite) und SOE (Sequence of Events) aufgezeichnet werden, ein zeitlicher Versatz in einer Größenordnung von mehreren Sekunden zwischen den verschiedenen Datenschreibern auftreten. Bei Datenschreibern mit fehlender Sommer-/Winterzeitumstellung oder falsch eingestellter Zeitzone, kann der zeitliche Versatz zwischen den verschiedenen Datenschreibern sogar in einer Größenordnung von Stunden liegen.

Aus der Informatik sind Lösungen im Umfeld verteilter Systeme bekannt. Hierzu bedient man sich dem Konstrukt einer logischen Zeit, wie sie beispielsweise bei der Lamport-Uhr verwendet wird. Dabei werden Daten bzw. Nachrichten mit eindeutigen Zeitstempeln versehen, die eine Zuweisung von partiellen kausalen Ordnungen zu bestimmten Ereignissen innerhalb eines verteilten Systems ermöglicht.

Im Falle, dass im Rahmen einer Analyse eines technischen Systems zeitlich hoch aufgelöste Daten benötigt werden, ist die Lösung der logischen Zeit aus folgenden Gründen nicht anwendbar. Zum einen benötigen die zur Erzeugung der logischen Zeit eingesetzten Algorithmen einen zeitlichen Aufwand, der während einer Aufnahme von zeitlich hochauflösenden Daten des technischen Systems nicht zur Verfügung steht. Zum anderen spielen für eine Analyse von Datenreihen des technischen Systems konkrete Zeitintervalle eine bedeutende Rolle. Bei der Verwendung einer logischen Zeit existiert aber keine Zeitdauer mehr, da das Konstrukt der logischen Zeit nur noch Vorher-Nachher-Beziehungen abbildet.

Ein manuelles Vergleichen von verschiedenen Datenreihen kommt aufgrund der großen Datenmenge und der erforderlichen Analysegeschwindigkeit nur in Ausnahmefällen in Frage.

Aus der US 2007/0162244 A1 ist ein Verfahren zur Korrektur eines zeitlichen Versatzes zwischen zwei Systemen bekannt.

Die US 9,613,661 B2 offenbart ein Informationsverarbeitungssystem, das Bildinformationen und Informationen beispielsweise eines an einer Person angebrachten Bewegungssensors erfassen und eine Korrektur einer zeitlichen Abweichung zwischen den Bildinformationen und den Sensordaten vornehmen kann. Dabei werden die Daten über einen größeren Zeitraum, beispielsweise mehrere Stunden, hinweg betrachtet, um anschließend eine Korrektur des zeitlichen Versatzes zu berechnen.

Die von der US 9,613,661 B2 offenbarte Lösung kann für die betrachteten zeitlich hochauflösenden Daten des technischen Systems nicht eingesetzt werden, da sich innerhalb der in der US 9,613,661 B2 verwendeten großen Zeiträume der Zeitversatz zwischen den einzelnen Datenreihen deutlich ändern kann. Die zeitliche Korrektur, die in der US 9,613,661 B2 verfolgt wird, ist daher unzureichend.

Der Erfindung liegt die Aufgabe zugrunde, ein Verfahren zur zeitlichen Synchronisation wenigstens zweier Datenzeitreihen und/oder wenigstens zweier Ereignissequenzen von Sensoren anzugeben, das eine Genauigkeit und Anpassungsfähigkeit der Synchronisation erhöht und dabei sowohl auf Datenzeitreihen als auch auf Ereignissequenzen angewendet werden kann.

Diese Aufgabe wird gelöst durch ein Verfahren zur zeitlichen Synchronisation wenigstens zweier Datenzeitreihen und/oder wenigstens zweier Ereignissequenzen von Sensoren, die im Umfeld einer industriellen Anlage auftreten, wobei die wenigstens zwei Datenzeitreihen und/oder Ereignissequenzen eine wechselseitige Korrelation aufweisen, nach Anspruch 1. Außerdem wird die Aufgabe gelöst durch ein Verfahren zur zeitlichen Synchronisation wenigstens zweier Datenzeitreihen von Sensoren nach Anspruch 2, ein Verfahren zur zeitlichen Synchronisation wenigstens zweier Ereignissequenzen nach Anspruch 3 und ein Verfahren zur zeitlichen Synchronisation wenigstens einer Datenzeitreihe und wenigstens einer Ereignissequenz von Sensoren nach Anspruch 4. Darüber hinaus wird die Aufgabe gelöst durch ein Synchronisationssystem zur zeitlichen Synchronisation von Datenzeitreihen und/oder Ereignissequenzen von Sensoren nach Anspruch 7, ein Synchronisierungsprogramm zur zeitlichen Synchronisation zur zeitlichen Synchronisation wenigstens zweier Datenzeitreihen und/oder wenigstens zweier Ereignissequenzen von Sensoren nach Anspruch 8, ein Speichermedium mit einem durch einen Computer ausführbaren Synchronisierungsprogramm nach Anspruch 9 und ein Computersystem nach Anspruch 10.

Vorteilhafte Weiterbildungen ergeben sich aus den abhängigen Ansprüchen.

Bei einem Synchronisationsverfahren der eingangs beschriebenen Art wird die Aufgabe erfindungsgemäß durch die folgenden Verfahrensschritte gelöst:

a) Ermittlung einer wechselseitigen Korrespondenz wenigstens zweier Datenzeitreihen und/oder wenigstens zweier Ereignissequenzen innerhalb eines ersten Zeitabschnitts der Datenzeitreihen und/oder Ereignissequenzen mittels einer Maximierung eines geeigneten Ähnlichkeitsmaßes, insbesondere einer Minimierung einer quadratischen Fehlersumme oder mittels einer Maximierung eines Korrelationskoeffizienten;

b) Berechnung eines zeitlichen Versatzes zwischen den einzelnen Datenzeitreihen und/oder Ereignissequenzen;

c) Zeitliche Korrektur wenigstens einer der Datenzeitreihen und/oder Ereignissequenzen;

d) Kontinuierliche Wiederholung der Schritte a) bis c) in auf den ersten Zeitabschnitt folgenden Zeitabschnitten, wobei sich die Zeitabschnitte vorzugsweise teilweise überlappen.

Das erfindungsgemäße Verfahren basiert auf der Annahme, dass wenigstens zwei Datenzeitreihen oder wenigstens zwei Ereignissequenzen eine wechselseitige Korrelation aufweisen. Diese Korrelation kann ihre Ursache beispielsweise darin haben, dass zwei Datenschreiber einen gemeinsamen Sensor, beispielsweise einen Gasdurchflussmesser, protokollieren und dabei jeweils eine Datenzeitreihe als Ausgabe erzeugen. Bei den unterschiedlichen Datenschreibern kann es sich beispielsweise um einen Sequence of Event (SOE) Recorder, ein WinTS (Windows Control Center Telecommunication Suite) Diagnosesystem oder um einen Time-of-Flight (ToF) Recorder handeln. In einem Idealfall würden die Datenschreiber identische Datenzeitreihen erzeugen. In der Praxis kommt es aber zu dem bereits erläuterten zeitlichen Versatz, der zu korrigieren ist.

Im Falle von Ereignissequenzen kann eine wechselseitige Korrelation beispielsweise in dem Fall auftreten, dass mehrere Sensoren dieselben identifizierbaren Ereignisse in der industriellen Anlage protokollieren. Es kann auch vorkommen, dass verschiedene Ereignissequenzen überlappende Ereignistypen aufweisen, was zu einer wenigstens teilweisen Korrelation führt.

Im Rahmen des erfindungsgemäßen Verfahrens werden die Datenzeitreihen bzw. Ereignissequenzen in eine zeitliche Relation gesetzt, um aus der ermittelten Relation anschließend einen zeitlichen Korrekturfaktor zu bestimmen. Hintergrund ist dabei, dass ein zeitlicher Versatz berechnet werden kann, wenn eine genaue zeitliche Relation/Korrespondenz der einzelnen Datenzeitreihen bzw. Ereignissequenzen bekannt ist.

Das erfindungsgemäße Verfahren wird wiederholt in verschiedenen Zeitabschnitten der Datenzeitreihen bzw. der Ereignissequenzen angewandt. Dies ermöglicht eine besonders feine, d.h. zeitlich hoch aufgelöste, und exakte zeitliche Synchronisation.

Da die zeitliche Korrektur erfindungsgemäß auf jeweils abgeschlossenen Zeitabschnitten erfolgt, skaliert sie linear mit einem Aufzeichnungszeitraum der Datenzeitreihe bzw. der Ereignissequenz. Dadurch kann die zeitliche Korrektur bzw. Synchronisation parallel durchgeführt werden, was den zeitlichen Aufwand für die Synchronisation deutlich reduzieren kann. Eine Überlappung der Zeitabschnitte schließt dabei die Abgeschlossenheit der jeweiligen Zeitabschnitte nicht aus.

Das erfindungsgemäße Synchronisationsverfahren ermöglicht insgesamt gesehen einen umfassenderen, automatisierten und schnellen Abgleich von Zeitreihenereignissen.

Die Aufgabe wird gleichsam gelöst durch ein Verfahren zur zeitlichen Synchronisation wenigstens zweier Datenzeitreihen von Sensoren, die im Umfeld einer industriellen Anlage auftreten, wobei die wenigstens zwei Datenzeitreihen eine wechselseitige Korrelation aufweisen. Das Verfahren umfasst die folgenden Schritte:

a) Durchführung einer Ereigniserkennung in den Datenzeitreihen, vorzugsweise mittels einer Erkennung eines Signalflankenwechsels und/oder einer Erkennung von Mustern, insbesondere mittels statistischen Verfahren oder Machine Learning;

b) Ermittlung einer wechselseitigen Korrespondenz der wenigstens zwei Datenzeitreihen innerhalb eines ersten Zeitabschnitts der Datenzeitreihen mittels einer Maximierung eines geeigneten Ähnlichkeitsmaßes, insbesondere einer Minimierung einer quadratischen Fehlersumme oder mittels einer Maximierung eines Korrelationskoeffizienten;

c) Berechnung eines zeitlichen Versatzes zwischen den wenigstens zwei Datenzeitreihen;

d) Zeitliche Korrektur der wenigstens zwei Datenzeitreihen;

e) Kontinuierliche Wiederholung der Schritte a) bis d) in auf den ersten Zeitabschnitt folgenden Zeitabschnitten, wobei sich die Zeitabschnitte vorzugsweise teilweise überlappen.

Im Vergleich zum zuvor beschriebenen Verfahren erfolgt eine zeitliche Synchronisation zweier Datenzeitreihen dadurch, dass vor der Korrespondenzermittlung der beiden Datenzeitreihen eine Ereigniserkennung auf beiden Datenzeitreihen vorgenommen wird. Bei den zu erkennenden Ereignissen kann es sich um charakteristische, d.h. markante Ereignisse handeln.

Durch die Ereigniserkennung wird die zeitliche Synchronisation für den Fall deutlich erleichtert, da die Datenzeitreihen jeweils von Datenschreibern stammen, die verschiedene Sensoren protokollieren. Durch das beschriebene Verfahren können anhand weniger (Synchronisierungs-)Zeitreihen alle Zeitreihen eines Datenschreibers in einem bestimmten Zeitabschnitt korrigiert werden.

Im Falle einer Synchronisation von wenigstens zwei Ereignissequenzen wird die Aufgabe auch dadurch gelöst, dass die folgenden Schritte durchgeführt werden:

a) Ermittlung einer wechselseitigen Korrespondenz wenigstens zweier Ereignissequenzen innerhalb eines ersten Zeitabschnitts der Ereignissequenzen mittels der Betrachtung bestimmter Zeitabschnitte, in denen bestimmte Ereignisse der Ereignissequenzen zu erwarten sind;

b) Berechnung eines zeitlichen Versatzes zwischen den einzelnen Ereignissequenzen;

c) Zeitliche Korrektur wenigstens einer der Ereignissequenzen;

d) Kontinuierliche Wiederholung der Schritte a bis c in auf den ersten Zeitabschnitt folgenden Zeitabschnitten, wobei sich die Zeitabschnitte vorzugsweise teilweise überlappen.

Dabei wird von der Annahme ausgegangen, dass jeweils ein Ereignis in allen betrachteten Ereignissequenzen innerhalb eines vorher bekannten Zeitabschnittes auftreten. Durch die Begrenzung der Suche nach identischen Ereignissen auf zeitlich festgelegte Bereiche lässt sich das Synchronisationsverfahren besonders effektiv und ressourcensparend, insbesondere schneller durchführen.

Die Aufgabe wird weiterhin durch ein Verfahren zur zeitlichen Synchronisation wenigstens einer Datenzeitreihe und wenigstens einer Ereignissequenz von Sensoren, die im Umfeld einer industriellen Anlage auftreten, wobei die wenigstens eine Datenzeitreihe und die wenigstens eine Ereignissequenz eine wechselseitige Korrelation aufweisen, gelöst. Das Verfahren sieht die folgenden Schritte vor:

a) Durchführung einer Ereigniserkennung in der Datenzeitreihe, vorzugsweise mittels einer Erkennung eines Signalflankenwechsels und/oder einer Erkennung von Mustern, insbesondere mittels statistischen Verfahren oder Machine Learning;

b) Ermittlung einer wechselseitigen Korrespondenz der wenigstens einen Datenzeitreihe und wenigstens einen Ereignissequenz innerhalb eines ersten Zeitabschnitts der wenigstens einen Datenzeitreihe und wenigstens einen Ereignissequenz mittels einer Maximierung eines geeigneten Ähnlichkeitsmaßes, insbesondere einer Minimierung einer quadratischen Fehlersumme oder mittels einer Maximierung eines Korrelationskoeffizienten;

c) Berechnung eines zeitlichen Versatzes zwischen der wenigstens einen Datenzeitreihe und der wenigstens einen Ereignissequenz;

d) Zeitliche Korrektur der wenigstens einen Datenzeitreihe und/oder der wenigstens einen Ereignissequenz;

e) Kontinuierliche Wiederholung der Schritte a) bis c) in auf den ersten Zeitabschnitt folgenden Zeitabschnitten, wobei sich die Zeitabschnitte vorzugsweise teilweise überlappen.

Die Korrespondenz zwischen einer Datenzeitreihe und einer Ereignissequenz lässt sich dadurch ermitteln, dass zunächst eine Ereigniserkennung auf der Datenzeitreihe vorgenommen wird. Die Ereigniserkennung kann dabei bei allen bisher erläuterten Verfahren insbesondere mittels folgender Regeln durchgeführt werden:

- Die Detektion eines Flankenwechsels eines Signals von logisch Eins zu logisch Null oder umgekehrt.
- Eine Mustererkennung mittels an sich bekannter statistischer Verfahren.

- Eine Mustererkennung mittels Machine Learning Verfahren.

Die jeweils mittels der zuvor erläuterten erfindungsgemäßen Verfahren ermittelte zeitliche Korrektur wird jeweils dazu verwendet die komplette Datenzeitreihe bzw. Ereignissequenz sowie alle anderen Zeitreihen der jeweils protokollierenden Datenschreiber zu korrigieren.

Als Referenz für die Korrektur kann dabei die Datenzeitreihe und/oder Ereignissequenz verwendet werden, die die höchste zeitliche Auflösung der zu synchronisierenden Datenzeitreihen und/oder Ereignissequenzen aufweist.

Besonders bevorzugt wird die ermittelte zeitliche Korrektur zusätzlich zur Korrektur von weiteren Datenzeitreihen und/oder Ereignissequenzen verwendet, wobei die weiteren Datenzeitreihen und/oder Ereignissequenzen einem gemeinsamen Datenschreiber und/oder einem gemeinsamen Sensor zugeordnet sind, welcher Datenschreiber und/oder Sensor einer der beiden Datenzeitreihen und/oder Ereignissequenzen zugeordnet ist, die gemäß dem erfindungsgemäßen Verfahren zur Berechnung der zeitlichen Korrektur verwendet wurden.

Beispielsweise werden 300 Temperatur-Zeitreihendaten, die einem WinTS-Datenschreiber entstammen, anhand der Zeitreihendaten eines Gasdurchflussmessers korrigiert, welcher sowohl mittels eines SoE-Datenschreibers und des zuvor erwähnten WinTS-Datenschreibers protokolliert ist. Die 300 Temperatur-Zeitreihendaten sind hingegen nur in den WinTS-Daten verfügbar. Diese Weiterbildung des erfindungsgemäßen Verfahrens gestaltet sich dahingehend besonders vorteilhaft, dass eine Übertragbarkeit der zuvor ermittelten zeitlichen Synchronisation bzw. Korrektur auf weitere Zeitreihendaten ohne eigene Synchronisationspunkte stattfinden kann.

Die Aufgabe wird zudem durch ein Synchronisationssystem zur zeitlichen Synchronisation von Datenzeitreihen und/oder Ereignissequenzen von Sensoren, die im Umfeld einer industriellen Anlage auftreten, wobei die Datenzeitreihen und/oder Ereignissequenzen eine wechselseitige Korrelation aufweisen, gelöst. Das Synchronisationssystem ist dazu ausgebildet,

a) eine Ereigniserkennung in der Datenzeitreihe, vorzugsweise mittels einer Erkennung eines Signalflankenwechsels und/oder einer Erkennung von Mustern, insbesondere mittels statistischen Verfahren oder Machine Learning, durchzuführen;
b) eine wechselseitige Korrespondenz wenigstens zweier Datenzeitreihen und/oder wenigstens zweier Ereignissequenzen innerhalb eines ersten Zeitabschnitts der Datenzeitreihen und/oder Ereignissequenzen mittels einer Maximierung eines geeigneten Ähnlichkeitsmaßes, insbesondere einer Minimierung einer quadratischen Fehlersumme oder mittels einer Maximierung eines Korrelationskoeffizienten, zu bestimmen;
c) einen zeitlichen Versatz zwischen den einzelnen Datenzeitreihen und/oder Ereignissequenzen zu berechnen;
d) eine zeitliche Korrektur wenigstens einer der Datenzeitreihen und/oder Ereignissequenzen vorzunehmen; und
e) die Bestimmung der Korrespondenz, die Berechnung des zeitlichen Versatzes und die Vornahme der zeitlichen Korrektur wiederholt in auf den ersten Zeitabschnitten folgenden Zeitabschnitten durchzuführen, wobei sich die Zeitabschnitte vorzugsweise teilweise überlappen.

Zudem wird die Aufgabe gelöst durch ein Synchronisierungsprogramm zur zeitlichen Synchronisation zur zeitlichen Synchronisation wenigstens zweier Datenzeitreihen und/oder wenigstens zweier Ereignissequenzen von Sensoren, die im Umfeld einer industriellen Anlage auftreten, wobei die wenigstens zwei Datenzeitreihen und/oder Ereignissequenzen eine wechselseitige Korrelation aufweisen, wobei das Programm auf einem computerlesbaren Speichermedium hinterlegt ist und durch einen Computer ausführbaren Programmcodeanweisungen umfasst zur Implementierung des erfindungsgemäßen Verfahrens.

Außerdem wird die Aufgabe durch ein Speichermedium mit einem durch einen Computer ausführbaren Synchronisierungsprogramm und durch ein Computersystem, auf dem ein erfindungsgemäßes Computerprogramm implementiert ist, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:

FIG 1    einen exemplarischen zeitlichen Versatz zweier Datenzeitreihen;

FIG 2    exemplarische Datenzeitreihen von drei verschiedenen Datenschreibern mit zeitlichem Versatz; und

FIG 3    die Datenzeitreihen aus FIG 2 nach Anwendung des erfindungsgemäßen Verfahrens zur Korrektur des zeitlichen Versatzes.

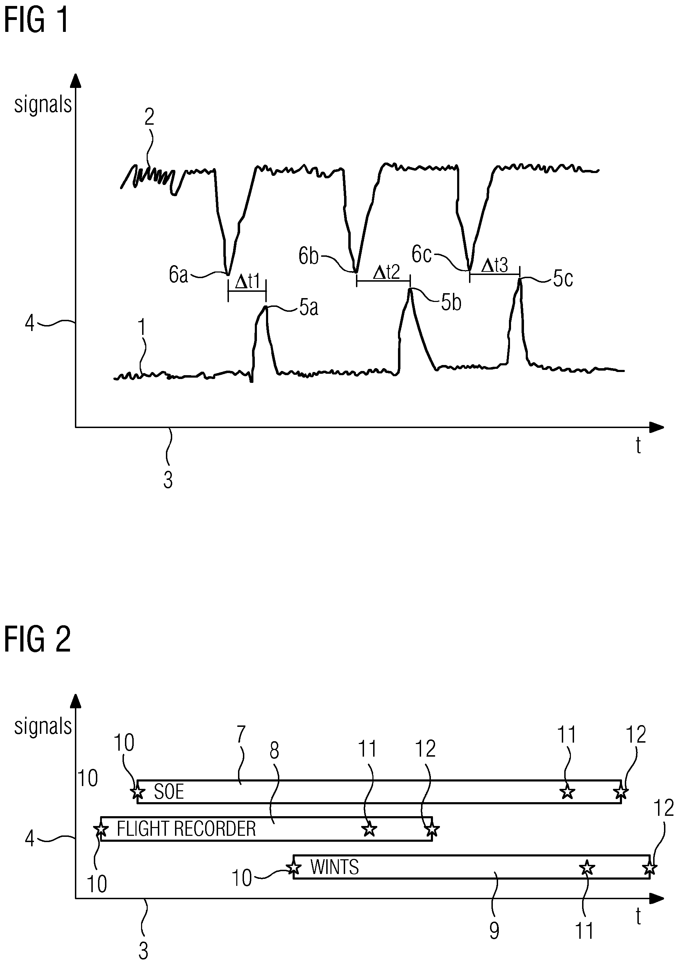

In FIG 1 ist ein zeitlicher Verlauf zweier Datenzeitreihen 1, 2 dargestellt. Die Abszissenachse 3 stellt dabei eine Zeitdauer dar, während die Ordinatenachse 4 einen Signalwert repräsentiert. Die erste Datenzeitreihe 1 entstammt einem ersten Sensor (nicht dargestellt), die zweite Datenzeitreihe 2 einem zweiten, von dem ersten verschiedenen Sensor (nicht dargestellt). Beide Sensoren protokollieren dieselben Ereignisse bzw. Datenquellen und weisen daher eine wechselseitige Korrelation auf. Sie sollten daher im Idealfall identisch sein. In der Praxis kommt es aber zu dem zuvor bereits erläuterten zeitlichen Versatz Δt1, Δt2, Δt3.

In FIG 1 ist zu erkennen, dass die beiden Datenzeitreihen 1, 2 nicht nur einen Offset-Versatz (in Richtung der Abszissenachse 3) aufweisen, sondern auch zeitlich zueinander gestreckt bzw. gestaucht sind. Ein erster zeitlicher Versatz Δt1 ergibt sich zwischen einer ersten Flanke 5a der ersten Datenzeitreihe 1 und einer ersten Flanke 6a der zweiten Datenzeitreihe 2. Ein zweiter zeitlicher Versatz Δt2 ergibt sich zwischen einer zweiten Flanke 5b der ersten Datenzeitreihe 1 und einer zweiten Flanke 6b der zweiten Datenzeitreihe 2. Ein dritter zeitlicher Versatz Δt3 ergibt sich zwischen einer dritten Flanke 5c der ersten Datenzeitreihe 1 und einer dritten Flanke 6c der zweiten Datenzeitreihe 2.

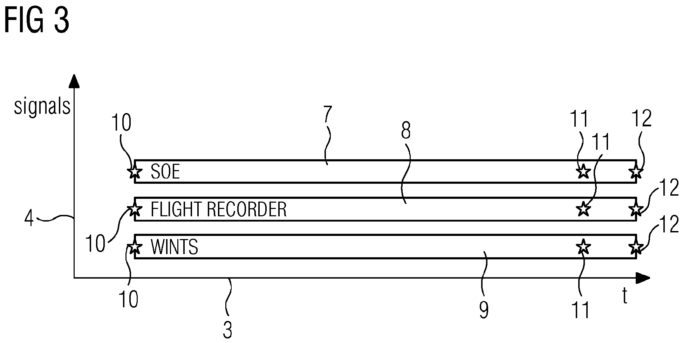

In FIG 1 gilt dabei: $|\Delta t1|<|\Delta t2|<|\Delta t3|$. Mit anderen Worten ist die erste Datenzeitreihe 1 im Vergleich zur zweiten Datenzeitreihe 2 in Richtung der Abszissenachse 3 gestreckt. Dieser zeitliche Versatz Δt1, Δt2, Δt3 zwischen den einzelnen Datenreihen 1, 2 kann für eine Datenanalyse problematisch sein, insbesondere für die Analyse von Ursache-Wirkung-Beziehungen. Im Folgenden wird anhand der Figuren 2 und 3 dargestellt, wie ein erfindungsgemäßes Verfahren eine Korrektur dieses zeitlichen Versatzes Δt1, Δt2, Δt3 vornimmt und Datenzeitreihen zeitlich miteinander synchronisiert.

In FIG 2 sind drei Datenzeitreihen 7, 8, 9 in ihrem zeitlichen Verlauf in einem Synchronisationsintervall dargestellt. Die Abszissenachse 3 stellt dabei eine Zeitdauer dar, während die Ordinatenachse 4 einen Signalwert repräsentiert. Die erste Datenzeitreihe 7 entstammt einem Sequence of Event (SOE) Recorder (nicht dargestellt), die zweite Datenzeitreihe 8 einem Time-of-Flight (ToF) Recorder und die dritte Datenzeitreihe 9 einem WinTS (Windows Control Center Telecommunication Suite) Diagnosesystem.

Alle drei Datenzeitreihen 7, 8, 9 protokollieren jeweils eine Ereignissequenz, die drei identische Ereignisse 10, 11, 12 umfasst. Bei den Ereignissen 10, 11, 12 kann es sich beispielsweise um das Öffnen oder Schließen eines Ventils, das Über- oder Unterschreiten eines Schwellwerts oder dergleichen handeln. Da die drei Ereignisse 10, 11, 12 jeweils identisch sind, müssten ihre zeitliche Position auf der Abszissenachse 3 auch in jeder Datenzeitreihe 7, 8, 9 identisch sein. Offensichtlich ist dies aber nicht der Fall. Im Gegenteil, es ist ein deutlicher zeitlicher Versatz zwischen den drei Datenzeitreihen 7, 8, 9 zu erkennen. Aus Übersichtlichtlickeitsgründen ist der zeitliche Versatz in den Figuren 2 und 3 jedoch nicht explizit bezeichnet.

Als Referenzreihe für die zeitliche Korrektur wird die Datenzeitreihe 7 verwendet, die die höchste zeitliche Auflösung aufweist. Es ist aber ebenso möglich, eine der beiden anderen Datenzeitreihen 8, 9 als Referenz zu verwenden. Zunächst wird ein zeitlicher Versatz zwischen der ersten Datenzeitreihe 7 und der zweiten Datenzeitreihe 9 berechnet. Ferner wird ein Korrekturfaktor (correctionFactor$_{wints}$) berechnet, der sich aus dem Quotienten der jeweils zeitlichen Längen beider Synchronisierungsintervalle ergibt (correctionFactor_winTs = T(SOE)/T(WinTS)) (Zeitdauer zwischen den Ereignissen 10/11 oder 11/12). Ein zeitlich korrigierter Verlauf der zweiten Datenzeitreihe 9 ergibt sich dann gemäß der folgenden Berechnungsvorschrift:

$$t_{wints_{corrected}}=t_{soe_{start}}+\left(t_{wints}-t_{wints_{start}}\right)*correctionFactor_{wints}$$

Dabei entspricht $t_{wints_{corrected}}$ der zeitlich korrigierten zweiten Datenzeitreihe 9, $t_{soe_{start}}$ dem Startpunkt bzw. Referenzwert der ersten Datenzeitreihe 7, $t_{wints}$ der unkorrigierten zweiten Datenzeitreihe und $t_{wints_{start}}$ dem Startpunkt der zweiten Datenzeitreihe 9. Dabei wird sowohl eine Korrektur eines zeitlichen Offset-Versatzes (durch die Addition von $t_{soe_{start}}$) als auch einer Streckung/Stauchung der zweiten Datenzeitreihe 9 (durch die Multiplikation mit dem Korrekturfaktor correctionFactor$_{wints}$).

Diese Korrekturvorschrift, wird nun gleichsam auf alle anderen protokollierten Zeitreihendaten des WinTS Datenschreibers angewendet, die sich innerhalb des Synchronisationsintervalls der synchronisierten Datenzeitreihe befinden.

Die dritte Datenzeitreihe 8 wird entsprechend der folgenden Berechnungsvorschrift zeitlich korrigiert:

$$t_{flight_{corrected}}=t_{soe_{start}}+\left(t_{flight}-t_{flight_{start}}\right)*correctionFactor_{flight}$$

Dabei entspricht $t_{flight_{corrected}}$ der zeitlich korrigierten zweiten Datenzeitreihe 8, $t_{soe_{start}}$ dem Startpunkt bzw. Referenzwert der ersten Datenzeitreihe 7, $t_{flight}$ der unkorrigierten zweiten Datenzeitreihe und $t_{flight_{start}}$ dem Startpunkt der zweiten Datenzeitreihe 8. Dabei wird sowohl eine Korrektur eines zeitlichen Offset-Versatzes (durch die Addition von $t_{soe_{start}}$) als auch einer Streckung/Stauchung der zweiten Datenzeitreihe 8 (durch die Multiplikation mit dem Korrekturfaktor correctionFactor$_{flight}$). Diese Korrekturvorschrift, wird nun gleichsam auf alle anderen protokollierten Zeitreihendaten des Time-of-Flight Datenschreibers angewendet, die sich innerhalb des Synchronisationsintervalls der synchronisierten Datenzeitreihe befinden.

In FIG 3 sind die zeitlich synchronisierten drei Datenzeitreihen 7, 8, 9 dargestellt. Es ist gut zu erkennen, dass sich die drei Ereignisse 10, 11, 12 an derselben Position auf der Abszissenachse 3 befinden. Die drei Datenzeitreihen 7, 8, 9 sind damit zeitlich miteinander synchronisiert.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur zeitlichen Synchronisation wenigstens zweier Datenzeitreihen (1, 2, 7, 8, 9) und/oder wenigstens zweier Ereignissequenzen (10, 11, 12) von Sensoren, die im Umfeld einer industriellen Anlage auftreten, wobei die wenigstens zwei Datenzeitreihen (1, 2, 7, 8, 9) und/oder Ereignissequenzen (10, 11, 12) eine wechselseitige Korrelation aufweisen, umfassend:

   a) Ermittlung einer wechselseitigen Korrespondenz wenigstens zweier Datenzeitreihen (1, 2, 7, 8, 9) und/oder wenigstens zweier Ereignissequenzen innerhalb eines ersten Zeitabschnitts der Datenzeitreihen (1, 2, 7, 8, 9) und/oder Ereignissequenzen (10, 11, 12) mittels einer Maximierung eines geeigneten Ähnlichkeitsmaßes, insbesondere einer Minimierung einer quadratischen Fehlersumme oder mittels einer Maximierung eines Korrelationskoeffizienten;
   b) Berechnung eines zeitlichen Versatzes ($\Delta t1$, $\Delta t2$, $\Delta t3$) zwischen den einzelnen Datenzeitreihen (1, 2, 7, 8, 9) und/oder Ereignissequenzen (10, 11, 12);
   c) Zeitliche Korrektur wenigstens einer der Datenzeitreihen (1, 2, 7, 8, 9) und/oder Ereignissequenzen (10, 11, 12);
   d) Kontinuierliche Wiederholung der Schritte a) bis c) in auf den ersten Zeitabschnitt folgenden Zeitabschnitten, wobei sich die Zeitabschnitte vorzugsweise teilweise überlappen.

2. Verfahren zur zeitlichen Synchronisation wenigstens zweier Datenzeitreihen (1, 2, 7, 8, 9) von Sensoren, die im Umfeld einer industriellen Anlage auftreten, wobei die wenigstens zwei Datenzeitreihen (1, 2, 7, 8, 9) eine wechselseitige Korrelation aufweisen, umfassend:

   a) Durchführung einer Ereigniserkennung in den Datenzeitreihen (1, 2, 7, 8, 9), vorzugsweise mittels einer Erkennung eines Signalflankenwechsels und/oder einer Erkennung von Mustern, insbesondere mittels statistischen Verfahren oder Machine Learning;
   b) Ermittlung einer wechselseitigen Korrespondenz der wenigstens zwei Datenzeitreihen (1, 2, 7, 8, 9) innerhalb eines ersten Zeitabschnitts der Datenzeitreihen (1, 2, 7, 8, 9) mittels einer Maximierung eines geeigneten Ähnlichkeitsmaßes, insbesondere einer Minimierung einer quadratischen Fehlersumme oder mittels einer Maximierung eines Korrelationskoeffizienten;
   c) Berechnung eines zeitlichen Versatzes ($\Delta t1$, $\Delta t2$, $\Delta t3$) zwischen den wenigstens zwei Datenzeitreihen (1, 2, 7, 8, 9);
   d) Zeitliche Korrektur der wenigstens zwei Datenzeitreihen (1, 2, 7, 8, 9);
   e) Kontinuierliche Wiederholung der Schritte a) bis d) in auf den ersten Zeitabschnitt folgenden Zeitabschnitten, wobei sich die Zeitabschnitte vorzugsweise teilweise überlappen.

3. Verfahren zur zeitlichen Synchronisation wenigstens zweier Ereignissequenzen von Sensoren, die im Umfeld einer industriellen Anlage auftreten, wobei die wenigstens zwei Ereignissequenzen (10, 11, 12) eine wechselseitige Korrelation aufweisen, umfassend:

   a) Ermittlung einer wechselseitigen Korrespondenz wenigstens zweier Ereignissequenzen (10, 11, 12) innerhalb eines ersten Zeitabschnitts der Ereignissequenzen (10, 11, 12) mittels der Betrachtung bestimmter Zeitabschnitte, in denen bestimmte Ereignisse der Ereignissequenzen (10, 11, 12) zu erwarten sind;
   b) Berechnung eines zeitlichen Versatzes ($\Delta t1$, $\Delta t2$, $\Delta t3$) zwischen den einzelnen Ereignissequenzen (10, 11, 12);
   c) Zeitliche Korrektur wenigstens einer der Ereignissequenzen (10, 11, 12);
   d) Kontinuierliche Wiederholung der Schritte a bis c in auf den ersten Zeitabschnitt folgenden Zeitabschnitten, wobei sich die Zeitabschnitte vorzugsweise teilweise überlappen.

4. Verfahren zur zeitlichen Synchronisation wenigstens einer Datenzeitreihe (1, 2, 7, 8, 9) und wenigstens einer Ereignissequenz (10, 11, 12) von Sensoren, die im Umfeld einer industriellen Anlage auftreten, wobei die wenigstens eine Datenzeitreihe (1, 2, 7, 8, 9) und die wenigstens eine Ereignissequenz (10, 11, 12) eine wechselseitige Korrelation aufweisen, umfassend:

    a) Durchführung einer Ereigniserkennung in der Datenzeitreihe (1, 2, 7, 8, 9), vorzugsweise mittels einer Erkennung eines Signalflankenwechsels und/oder einer Erkennung von Mustern, insbesondere mittels statistischen Verfahren oder Machine Learning;

    b) Ermittlung einer wechselseitigen Korrespondenz der wenigstens einen Datenzeitreihe (1, 2, 7, 8, 9) und wenigstens einen Ereignissequenz (10, 11, 12) innerhalb eines ersten Zeitabschnitts der wenigstens einen Datenzeitreihe (1, 2, 7, 8, 9) und wenigstens einen Ereignissequenz (10, 11, 12) mittels einer Maximierung eines geeigneten Ähnlichkeitsmaßes, insbesondere einer Minimierung einer quadratischen Fehlersumme oder mittels einer Maximierung eines Korrelationskoeffizienten;

    c) Berechnung eines zeitlichen Versatzes ($\Delta t1$, $\Delta t2$, $\Delta t3$) zwischen der wenigstens einen Datenzeitreihe (1, 2, 7, 8, 9) und der wenigstens einen Ereignissequenz (10, 11, 12);

    d) Zeitliche Korrektur der wenigstens einen Datenzeitreihe (1, 2, 7, 8, 9) und/oder der wenigstens einen Ereignissequenz (10, 11, 12);

    e) Kontinuierliche Wiederholung der Schritte a bis c in auf den ersten Zeitabschnitt folgenden Zeitabschnitten, wobei sich die Zeitabschnitte vorzugsweise teilweise überlappen.

5. Verfahren nach einem der vorangegangenen Ansprüche, bei dem für die zeitliche Korrektur die Datenzeitreihe (1, 2, 7, 8, 9) und/oder Ereignissequenz (10, 11, 12) verwendet wird, die die höchste zeitliche Auflösung der zu synchronisierenden Datenzeitreihen (1, 2, 7, 8, 9) und/oder Ereignissequenzen (10, 11, 12) aufweist.

6. Verfahren nach einem der vorangegangenen Ansprüche, bei dem die ermittelte zeitliche Korrektur zusätzlich zur Korrektur von weiteren Datenzeitreihen (1, 2, 7, 8, 9) und/oder Ereignissequenzen (10, 11, 12) verwendet wird, wobei die weiteren Datenzeitreihen (1, 2, 7, 8, 9) und/oder Ereignissequenzen (10, 11, 12) einem gemeinsamen Datenschreiber und/oder einem gemeinsamen Sensor zugeordnet sind, welcher Datenschreiber und/oder Sensor einer der beiden Datenzeitreihen (1, 2, 7, 8, 9) und/oder Ereignissequenzen (10, 11, 12) zugeordnet ist, die nach einem der vorangegangenen Ansprüche zur Berechnung der zeitlichen Korrektur verwendet wurden.

7. Synchronisationssystem zur zeitlichen Synchronisation von Datenzeitreihen (1, 2, 7, 8, 9) und/oder Ereignissequenzen (10, 11, 12) von Sensoren, die im Umfeld einer industriellen Anlage auftreten, wobei die Datenzeitreihen (1, 2, 7, 8, 9) und/oder Ereignissequenzen (10, 11, 12) eine wechselseitige Korrelation aufweisen, welches Synchronisationssystem dazu ausgebildet ist,

    a) eine Ereigniserkennung in der Datenzeitreihe (1, 2, 7, 8, 9), vorzugsweise mittels einer Erkennung eines Signalflankenwechsels und/oder einer Erkennung von Mustern, insbesondere mittels statistischen Verfahren oder Machine Learning, durchzuführen;

    b) eine wechselseitige Korrespondenz wenigstens zweier Datenzeitreihen (1, 2, 7, 8, 9) und/oder wenigstens zweier Ereignissequenzen (10, 11, 12) innerhalb eines ersten Zeitabschnitts der Datenzeitreihen (1, 2, 7, 8, 9) und/oder Ereignissequenzen (10, 11, 12) mittels einer Maximierung eines geeigneten Ähnlichkeitsmaßes, insbesondere einer Minimierung einer quadratischen Fehlersumme oder mittels einer Maximierung eines Korrelationskoeffizienten, zu bestimmen;

    c) einen zeitlichen Versatz ($\Delta t1$, $\Delta t2$, $\Delta t3$) zwischen den einzelnen Datenzeitreihen (1, 2, 7, 8, 9) und/oder Ereignissequenzen (10, 11, 12) zu berechnen;

    d) eine zeitliche Korrektur wenigstens einer der Datenzeitreihen (1, 2, 7, 8, 9) und/oder Ereignissequenzen (10, 11, 12) vorzunehmen; und

    e) die Bestimmung der Korrespondenz, die Berechnung des zeitlichen Versatzes ($\Delta t1$, $\Delta t2$, $\Delta t3$) und die Vornahme der zeitlichen Korrektur wiederholt in auf den ersten Zeitabschnitten folgenden Zeitabschnitten durchzuführen, wobei sich die Zeitabschnitte vorzugsweise teilweise überlappen.

8. Synchronisierungsprogramm zur zeitlichen Synchronisation zur zeitlichen Synchronisation wenigstens zweier Datenzeitreihen (1, 2, 7, 8, 9) und/oder wenigstens zweier Ereignissequenzen (10, 11, 12) von Sensoren, die im Umfeld einer industriellen Anlage auftreten, wobei die wenigstens zwei Datenzeitreihen (1, 2, 7, 8, 9) und/oder Ereignissequenzen (10, 11, 12) eine wechselseitige Korrelation aufweisen, wobei das Programm auf einem computerlesbaren Speichermedium hinterlegt ist und durch einen Computer ausführbaren Programmcodeanweisungen umfasst zur Implementierung des Verfahrens nach einem der Ansprüche 1 bis 6.

9. Speichermedium mit einem durch einen Computer ausführbaren Synchronisierungsprogramm gemäß Anspruch 8.

10. Computersystem, auf dem ein Synchronisierungsprogramm nach Anspruch 8 implementiert.

# FIG 1

# FIG 2

## FIG 3

signals

10    7    8    11   12   11

SOE

FLIGHT RECORDER   12

4

10

WINTS   12

10    3    9    11    t

**Europäisches Patentamt**
**European Patent Office**
**Office européen des brevets**

# EUROPÄISCHER RECHERCHENBERICHT

Nummer der Anmeldung

EP 18 15 4586

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/085415 A1 (MORTON PETER J [US] ET AL) 14. April 2011 (2011-04-14) * Zusammenfassung; Ansprüche 1-12; Abbildungen 1-5 * * Absätze [0024] - [0029] * ----- | 1-10 | INV. G01M15/04 |
| X | EP 2 341 630 A1 (NXP BV [NL]) 6. Juli 2011 (2011-07-06) * Zusammenfassung; Ansprüche 1-15; Abbildungen 1-3 * * Absätze [0020] - [0026] * ----- | 1-10 | |
| X | US 2004/172240 A1 (CROCKETT BRETT G [US] ET AL) 2. September 2004 (2004-09-02) * Zusammenfassung; Ansprüche 1-13; Abbildungen 1-6 * ----- | 1-10 | |
| A | EP 1 676 992 A1 (A & D CO LTD [JP]; HINO MOTORS LTD [JP]) 5. Juli 2006 (2006-07-05) * das ganze Dokument * ----- | 1-10 | |

**RECHERCHIERTE SACHGEBIETE (IPC)**

G01M

Der vorliegende Recherchenbericht wurde für alle Patentansprüche erstellt

| Recherchenort | Abschlußdatum der Recherche | Prüfer |
|---|---|---|
| Den Haag | 2. Juli 2018 | Moscelli, Nicola |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 4586

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2018

| Im Recherchenbericht angeführtes Patentdokument | Datum der Veröffentlichung | Mitglied(er) der Patentfamilie | Datum der Veröffentlichung |
|---|---|---|---|
| US 2011085415 A1 | 14-04-2011 | AU 2010303399 A1<br>CA 2777296 A1<br>EP 2486428 A2<br>US 2011085415 A1<br>WO 2011044352 A2 | 24-05-2012<br>14-04-2011<br>15-08-2012<br>14-04-2011<br>14-04-2011 |
| EP 2341630 A1 | 06-07-2011 | CN 102136844 A<br>EP 2341630 A1<br>US 2011189968 A1 | 27-07-2011<br>06-07-2011<br>04-08-2011 |
| US 2004172240 A1 | 02-09-2004 | KEINE | |
| EP 1676992 A1 | 05-07-2006 | CN 1849446 A<br>EP 1676992 A1<br>JP 4417331 B2<br>JP WO2005028838 A1<br>KR 20060128839 A<br>US 2007057829 A1<br>WO 2005028838 A1 | 18-10-2006<br>05-07-2006<br>17-02-2010<br>15-11-2007<br>14-12-2006<br>15-03-2007<br>31-03-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070162244 A1

- US 9613661 B2